# EUROPÄISCHE PATENTANMELDUNG

(11) **EP 0 530 458 A1**
(43) Veröffentlichungstag der Anmeldung: **10.03.1993**
(21) Anmeldenummer: 92111045.8
(22) Anmeldetag: 30.06.1992
(51) Int. Cl.: C04B 30/02, B22D 41/50, C04B 28/00

(54) **Verfahren zur Herstellung eines flexiblen, kompressiblen, feuerfesten Fugenwerkstoffes auf Basis keramischer Fasern und zirkonoxidhaltigen Binders**

(30) Priorität: 03.09.1991 DE 4129194
(71) Anmelder: DIDIER-WERKE AG, D-65189 Wiesbaden (DE)
(72) Erfinder: Nebe, Ulrich, Dr., W-6303 Hungen (DE); Winkelmann, Manfred, W-4150 Krefeld 11 (DE); Muschner, Udo, W-4154 Tönisvorst 1 (DE); Amsler, Harry, CH-6404 Greppen (CH); Gerber, Pierre, CH-8914 Aengst am Albis (CH)
(74) Vertreter: Brückner, Raimund, Dipl.-Ing.

(57) **Zusammenfassung**

Die Erfindung bezieht sich auf einen flexiblen, kompressiblen feuerfesten Fugenwerkstoff auf der Basis keramischer Fasern zum Positionieren und/oder Abdichten von Formkörpern bzw. Fugen zwischen Formkörpern an metallurgischen Gefäßen, insbesondere von im Bereich von Ausgußverschlüssen eingesetzten Formkörpern, wie Hülsen, Platten, Steinen, Kegel, Rohren und dergleichen. Damit der Fugenwerkstoff bei guter Montierbarkeit und Demontierbarkeit dauerhafte Flexibilität und Dichtigkeit gewährleistet, sind die Fasern erfindungsgemäß mittels eines ZrO₂-haltigen Binders gebunden.

## Beschreibung

Die Erfindung bezieht sich auf einen flexiblen, kompressiblen feuerfesten Fugenwerkstoff auf der Basis keramischer Fasern zum Positionieren und/oder Abdichten von Formkörpern bzw. Fugen zwischen Formkörpern an metallurgischen Gefäßen, insbesondere von im Bereich von Ausgußverschlüssen eingesetzten Formkörpern, wie Hülsen, Platten, Steinen, Kegel, Rohren und dergleichen.

Aus der DE-PS 36 20 413 ist ein feuerfester Fugenwerkstoff aus keramischen Fasern und ungeformten Massen mit einem Anteil expandierenden Vermiculits zum Positionieren und Abdichten von insbesondere bei Ausgußverschlüssen und Gaseinführungen an metallurgischen Gefäßen verwendeten feuerfesten Formkörpern bekannt, bei welchem eine stets einwandfrei dichte, möglichst drucklos und leicht herstellbare Verfugung der feuerfesten Formkörper von Ausgußverschlüssen, Gaseinführungen und dergleichen dadurch ermöglicht werden soll, daß der Fugenwerkstoff ein Blähfaserfilz aus 20 bis 30 Gew.-% keramischen Fasern und 40 bis 60 Gew.-% Vermiculit sowie einen organischen Binder auf Acrylharzbasis ist.

Aus der DE-OS 32 01 809 ist ein hochverschleißfestes, luftdichtes Packungsmaterial bekannt, welches sich leicht aus den Verbindungsstellen dadurch lösen lassen soll, daß es im wesentlichen aus einer Mischung besteht, die zusammengesetzt ist aus mindestens einem feuerfesten Pulver und Keramikfasern, 0,5 bis 20 Gew.-% eines Metalls mit niedrigen Schmelzpunkt, bezogen auf das Gewicht der Mischung und einem Binder, dessen Menge von der Menge des niedrigschmelzenden Metalls abhängt. Wenn beispielsweise das Metall mit einem niedrigen Schmelzpunkt Aluminium ist, schmilzt dieses in einer Umgebung erhöhter Temperatur, in welcher der feuerfeste Aufbau unter Verwendung des Packungsmaterials bei der Stahlherstellung eingesetzt wird, und das geschmolzene Metall mit dem niedrigen Schmelzpunkt reagiert mit dem Sauerstoff, der in der Luft enthalten ist, welche in das Packungsmaterial eindringt, so daß Al₂O₃ entsteht. Wenn das niedrigschmelzende Metall mit dem Sauerstoff unter Erzeugung von Al₂O₃ reagiert, erhöht das Metall sein Volumen und füllt die Poren aus, die in dem Packungsmaterial vorhanden sind, um somit den Aufbau des Packungsmaterials zu verdichten, wodurch ein hoch luftdichtes Packungsmaterial entsteht. Das feuerfeste Pulver soll ein Metalloxid, wie Tonerde, Magnesia, Silika, Zirkonerde, Tonerde-Silicia, Zirkonerde-Silicia, Magnesia-Tonerde, Magnesia-Chrom, Magnesia-Magnesitchrom und Magnesia-Calcia, oder Metallcarbid, wie Siliciumcarbid, Metallnitrid, wie Siliciumnitrid oder Kohlenstoff sein können. Der Binder kann aus einer anorganischen oder organischen Materie bestehen, wie Natriumhexamethaphosphat, Natriumtripolyphosphat, Natriumpyrolinphosphat, Phenolharz, Furanharz, Epoxyharz oder Siliconharz. Dieses Packungsmaterial soll in gleicher Weise verarbeitet werden, wie herkömmlicher Mörtel.

Die bekannten Fugenwerkstoffe expandieren oder verspröden bei den Einsatztemperaturen, wie beispielsweise beim Strangguß, andere kleben am Feuerfestmaterial der Formkörper. Dadurch ist Gasdichtigkeit nicht gewährleistet oder ein Austausch des Fugenwerkstoffs bei Betriebstemperatur nur schwer möglich.

Aufgabe der vorliegenden Erfindung ist es, einen Fugenwerkstoff der eingangs genannten Art zu schaffen, welcher dauerhaft flexibel und gasdicht ist und beim Austausch eines der Formkörper bei Betriebstemperatur ohne weiteres mit ausgewechselt werden kann.

Diese Aufgabe wird erfindungsgemäß im wesentlichen dadurch gelöst, daß die Fasern mittels eines ZrO₂-haltigen Binders gebunden sind.

Der erfindungsgemäße Fugenwerkstoff ist dauerhaft flexibel und kompressibel und gegen die Infiltration von Metallschmelze beständig, da der Werkstoff nicht mit Metallschmelze benetzbar ist. Mit diesem Fugenwerkstoff ist die Abdichtung von Fugen auf einfache Weise möglich, auch wenn deren Begrenzungsflächen nicht geschliffen sind. Es ist eine Gasdichtigkeit bis 3 bar erreichbar, so daß eine Beeinträchtigung der Metallschmelze durch angesaugte Gase beim Ausströmen durch einen Ausgußverschluß, also beispielsweise durch Aufstickung, vermieden ist. Der erfundene Fugenwerkstoff ist sehr beständig gegen hohe Temperaturen auch unter oxidischer Atmosphäre. Es kommen sämtliche Anwendungen in Betracht, wie sie beispielsweise in der DE-PS 36 20 413 genannt sind. Eine Mörtelfuge, für welche bisher hochwertige Kitte eingesetzt wurden, ist entbehrlich. Damit entfällt auch die Notwendigkeit der Reinigung der die Fugen begrenzenden Flächen und der damit verbundenen zusätzlichen Vorbereitungsarbeit. Es tritt auch keine Versinterung der die Fuge begrenzenden Flächen auf, wodurch die beiden Formteile sauber wieder voneinander getrennt werden können. Ferner ist eine Umwandlung bei Abkühlung der abzudichtenden feuerfesten Formteile vermieden. Abdichtungen können mit dem erfindungsgemäßen Fugenwerkstoff zwischen beliebigen Materialflächen, metallener oder nichtmetallener Art vorgenommen werden. Einen bevorzugten Einsatz findet der erfindungsgemäße Fugenwerkstoff insbesondere dort, wo häufig Formkörper ausgetauscht werden müssen, also beispielsweise bei einem häufiger zu wechselnden Eintauchausguß.

Wenn der Fugenwerkstoff einen Füllstoff aufweist, ist dieser nach der Erfindung vorzugsweise Al₂O₃ oder ZrO₂.

Die Fasern selbst bestehen vorzugsweise aus Aluminiumsilikat, insbesondere Mullit, Aluminiumsilikat mit ZrO₂ und/oder Al₂O₃.

Die Erfindung bezieht sich auch auf ein Verfahren zur Herstellung eines Fugenwerkstoffs der zuvor erläuterten Art. Dabei bedient man sich vorzugsweise des Vacuumsaugverfahrens. Die Keramikfasern werden in Wasser dispergiert, zu der Dispersion ein Füllstoff gegeben und als Bindemittel eine ZrO₂-haltige Lösung hinzufügt.

Dabei kann man vorzugsweise als Bindemittel eine Zirkonacetat- oder Zirkonoxychloridlösung verwenden.

Zur Verbesserung der Grünfestigkeit kann man ferner Polyacrylsäureethylester zugeben.

Die Dispersion kann vorteilhafterweise mittels eines hochmolekularen Polyelektrolyten auf der Basis eines Methacrylsäureesters ausgeflockt werden.

Bei den durchgeführten Untersuchungen hat es sich als zweckmäßig erwiesen, daß der Füllstoff 5 bis 30 Gew.-%, vorzugsweise etwa 10 Gew.-%, der Fasern ausmacht.

Das Bindemittel, wie Zirkonacetat oder Zirkonoxychlorid, sollte 15 bis 50 Gew.-%, vorzugsweise etwa 20 bis 30 Gew.-%, von Fasern und Füllstoff ausmachen.

Die 0,2 %ige Polyacrylsäureethylesterlösung sollte 5 bis 15 Gew.-%, vorzugsweise etwa 10 Gew.-%, von Fasern und Füllstoff ausmachen.

Die Erfindung bezieht sich ferner auf einen Ausgußverschluß mit Lochstein und/oder Einlaufhülse und/oder Bodenplatte und/oder Schieberplatte und/oder Auslaufhülse und/oder Eintauchausguß und/oder dergleichen Formkörper, wobei wenigstens eine einen derartigen Formstein begrenzende Fuge mit einem Fugenwerkstoff der zuvor geschilderten Art ausgefüllt ist. Derartige Ausgußverschlüsse für Metallschmelzen enthaltende Behältnisse zeichnen sich durch eine gute Paßgenauigkeit und dauerhafte Dichtigkeit bei guter Montierbarkeit und Demontierbarkeit der einzelnen Formteile aus.

## Patentansprüche

1. Flexibler, kompressibler feuerfester Fugenwerkstoff auf der Basis keramischer Fasern zum Positionieren und/oder Abdichten von Formkörpern bzw. Fugen zwischen Formkörpern an metallurgischen Gefäßen, insbesondere von im Bereich von Ausgußverschlüssen eingesetzten Formkörpern, wie Hülsen, Platten, Steinen, Kegel, Rohren und dergleichen,
dadurch gekennzeichnet,
daß die Fasern mittels eines ZrO₂-haltigen Binders gebunden sind.

2. Fugenwerkstoff nach Anspruch 1 mit einem Füllstoff,
dadurch gekennzeichnet,
daß der Füllstoff ein feuerfestes Oxid, insbesondere Al₂O₃ oder ZrO₂ ist.

3. Fugenwerkstoff nach Anspruch 1 oder 2,
dadurch gekennzeichnet,
daß die Fasern aus Aluminiumsilikat, insbesondere Mullit, Aluminiumsilikat mit ZrO₂ und/oder Al₂O₃ bestehen.

4. Fugenwerkstoff nach einen der Ansprüche 1 bis 3,
dadurch gekennzeichnet,
daß er in Anpassung an das Profil der abzudichtenden Fuge vorgeformt ist.

5. Verfahren zur Herstellung eines Fugenwerkstoffs nach einem der Ansprüche 1 bis 4,
dadurch gekennzeichnet,
daß man die Keramikfasern in Wasser dispergiert, zu der Dispersion einen Füllstoff gibt und als Bindemittel eine ZrO₂-haltige Lösung hinzufügt.

6. Verfahren nach Anspruch 5,
dadurch gekennzeichnet,
daß man als Bindemittel eine Zirkonacetat- oder Zirkonoxychloridlösung verwendet.

7. Verfahren nach Anspruch 5 oder 6,
dadurch gekennzeichnet,
daß man der Dispersion ein Polyacrylsäureethylester zugibt.

8. Verfahren nach einem der Ansprüche 5 bis 7,
dadurch gekennzeichnet,
daß man die Dispersion mittels eines hochmolekularen Polyelektrolyten auf der Basis eines Methacrylsäureesters ausflockt.

9. Verfahren nach einem der Ansprüche 5 bis 8,
dadurch gekennzeichnet,
daß der Füllstoff 5 bis 30 Gew.-%, vorzugsweise etwa 10 Gew.-%, der Fasern ausmacht.

10. Verfahren nach einem der Ansprüche 5 bis 9,
dadurch gekennzeichnet,
daß das Bindemittel, wie Zirkonacetat oder Zirkonoxychlorid, 15 bis 50 Gew.-%, vorzugsweise etwa 20 bis 30 Gew.-%, von Fasern und Füllstoff ausmacht.

11. Verfahren nach einem der Ansprüche 5 bis 10,
dadurch gekennzeichnet,
daß eine 0,2 %ige Polyacrylsäureethylesterlösung 5 bis 15 Gew.-%, vorzugsweise etwa 10 Gew.-%, von Fasern und Füllstoff ausmacht.

12. Ausgußverschluß für ein metallurgisches Gefäß, mit Lochstein und/oder Einlaufhülse und/oder Bodenplatte und/oder Schieberplatte und/oder Auslaufhülse und/oder Eintauchausguß und/oder dergleichen Formkörper,
dadurch gekennzeichnet,
daß eine oder mehrere der Fugen benachbart eines oder mehrerer bzw. zwischen zwei oder mehreren der Formkörper mit einem Fugenwerkstoff nach einem der Ansprüche 1 bis 4, vorzugsweise hergestellt nach einem der Ansprüche 5 bis 11, abgedichtet ist bzw. sind.
